Europäisches Patentamt

European Patent Office

Office européen des brevets

(19)

(11) Veröffentlichungsnummer: **0 077 433**
**B1**

(12) # EUROPÄISCHE PATENTSCHRIFT

(45) Veröffentlichungstag der Patentschrift:
07.01.87

(51) Int. Cl.⁴: **F 16 D 65/12, F 16 D 65/847**

(21) Anmeldenummer: **82104865.9**

(22) Anmeldetag: **03.06.82**

(54) **Bremsring für Bremsscheiben von insbesondere Schienenfahrzeug-Scheibenbremsen.**

(30) Priorität: **19.10.81 DE 3141434**

(43) Veröffentlichungstag der Anmeldung:
**27.04.83 Patentblatt 83/17**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**WO - A - 79/01105**
**DE - B - 1 164 455**
**FR - A - 2 083 987**
**FR - A - 2 211 080**
**FR - A - 2 260 722**
**FR - A - 2 307 186**
**GB - A - 2 060 796**
**US - A - 1 453 599**
**US - A - 2 255 023**
**US - A - 2 464 754**
**US - A - 2 629 464**
**US - A - 3 391 763**

(73) Patentinhaber: **KNORR-BREMSE AG, Moosacher Strasse 80 Postfach 401060, D-8000 München 40 (DE)**

(72) Erfinder: **Wirth, Xaver, Dr., Birkhuhnweg 18, D-8045 Ismaning (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Bremsring für Bremsscheiben von insbesondere Schienenfahrzeug-Scheibenbremsen, mit zwei im Abstand nebeneinander angeordneten, an den einander abgewandten Aussenseiten von Bremsbacken beaufschlagbaren Ringkörpern, und mit in den Zwischenraum zwischen den Ringkörpern vorspringenden, an den Ringkörpern gehaltenen, mit Abstand zueinander und parallel zur Achse der Bremsscheibe angeordneten Stehbolzen, die in axialer Sicht in einem symmetrischen Muster angeordnet sind.

Ein derartiger Bremsring ist aus der USA-A-3 391 763 bekannt. Die Ringkörper sind hierbei durch schräg zur Radialen verlaufende Ventilationsrippen miteinander verbunden. Die Stehbolzen beider Ringkörper sind gleichachsig angeordnet und enden mit Abstand voreinander. Die Stehbolzenfelder zwischen zwei Ventilationsrippen weisen ein Anordnungsmuster auf, nach welchem die Stehbolzen in zur an das jeweilige Stehbolzenfeld angrenzenden Ventilationsrippe parallelen Reihen und offensichtlich in Teilkreisen um die Achse des Bremsringes derart angeordnet sind, dass sie im wesentlichen im ganzen Stehbolzenfeld gleichen Abstand zueinander aufweisen. Durch dieses Anordnungsmuster ergeben sich jedoch einseitig Störungen im Anschlussbereich an die jeweils andere Ventilationsrippe. Benachbarte, derartige Stehbolzenfelder sind zueinander entsprechend den Richtungen der Ventilationsrippen zueinander verdreht. Die Ringkörper dieses Bremsringes sind nur durch die in beachtlichem Abstand zueinander verlaufenden, starken Ventilationsrippen verbunden, sie neigen daher zu Verwerfungen. Im weiteren sind bei dem bekannten Bremsring die Stehbolzen aus einem wesentlich besser wärmeleitenden Material gefertigt als die einstückig mit den Ventilationsrippen gegossenen Ringkörper; sie sind in die Ringkörper durchsetzende Bohrungen eingesetzt und enden aussenseitig in Anlage an auf die Aussenseiten der Bremsringe aufgebrachten, gut wärmeleitenden und von den Bremsbacken beaufschlagbaren Überzügen. Die Fertigung dieses Bremsringes mit der Vielzahl von zur Aufnahme der Stehbolzen vorzusehender Bohrungen, das Einsetzen der vielen Stehbolzen und das Aufbringen der Überzüge erfordert aufwendige Arbeitsvorgänge der bekannte Bremsring ist somit aufwendig und teuer.

Aus der FR-A-2 211 080 ist ein Bremsring mit zwei Ringkörpern bekannt, die durch in drei Teilkreisen mit gleicher Winkelteilung angeordnete Stehbolzen miteinander verbunden sind, wobei der mittlere Teilkreis um einen halben Teilungswinkel verdreht ist. Bei dieser Anordnung ergeben sich zwangsweise nach radialaussen anwachsende Stehbolzen-Abstände, also eine über den ganzen Bremsring ungleichmässige Stehbolzen-Anordnung mit deren im einzelnen später erläuterten Mängeln.

Aus der DE-C-1 164 455 ist eine Bremsscheibe bekannt, bei welcher die Stehbolzen in radialer Richtung gesehen in Art von unterbrochenen Ventilationsschaufeln eines Querstromgebläserades angeordnet sind, die Stehbolzen sind also in radialer Richtung oder in einer Schaufelform entsprechender, gekrümmter Linie mit Abstand hintereinander angeordnet und weisen einen Querschnitt auf, welcher dem Querschnitt einer Ventilationsschaufel an der jeweiligen Stelle angenähert ist; die Stehbolzen können dabei angenähert dreieckigen, halbrunden, rechteckigen oder rautenförmigen Querschnitt aufweisen. Bei gekrümmten Ventilationsschaufeln entsprechender Anordnung der Stehbolzen ist es möglich, die Querschnitte und Abstände der Stehbolzen derart auszulegen, dass für beide Drehrichtungen geeignete Gebläseschaufeln nachgebildet werden. Bei allen bekannten Anordnungen besteht jedoch der Mangel, dass die Stehbolzen nicht an allen Stellen des Bremsringes mit gleichmässigem Abstand zueinander und/oder gleichen Querschnittflächen ausgebildet werden können, insbesondere in verschiedenen Durchmesserbereichen des Bremsringes sind beachtliche Abweichungen von einer gleichmässigen Verteilung vorhanden. Weiterhin hat sich gezeigt, dass der in Anlehnung an ein Querstromgebläserad ausgebildete Bremsring zwar einen hohen Luftdurchsatz und im ungebremsten Zustand einen dementsprechend grossen Ventilationsverlust bewirkt, dass der Wärmeübergang vom Brensring zur ihn durchsetzenden Kühlluft jedoch nicht optimal ist. Schliesslich ist die Herstellung des Bremsringes mit der unterschiedlichen Verteilung und Querschnittsform der Stehbolzen aufwendig und teuer.

Mit der DE-A-2 505 205 ist ein weiterer Bremsring für Schienenfahrzeug-Scheibenbremsen bekannt geworden, bei welchem die Stehbolzen runden Querschnitt aufweisen und in Teilkreisen unterschiedlichen Durchmessers nebeneinander angeordnet sind, wobei offensichtlich eine möglichst gleichmässige Verteilung der Stehbolzen über die ganze, von ihnen zu besetzende Bremsring-Fläche angestrebt wurde. In Aufsicht auf die Stehbolzen ist keinerlei Muster für die Stehbolzen-Anordnung erkennbar, nur in kleinen Bereichen sind die Stehbolzen radial gesehen hintereinander angeordnet. Bei der bekannten Scheibe ist des weiteren wesentlich, dass zusätzlich zu den Stehbolzen an den Ringkörpern schwach kegelig geformte, im Querschnitt ebenfalls kreisförmige «Stacheln» angeformt sind, die an beiden Ringkörpern gleichachsig zueinander ausgebildet sind und mit Abstand voreinander enden. Schliesslich weist der bekannte Bremsring noch zusätzlich radial durchgehende Ventilationsrippen auf. Mit dieser Bremsringausbildung wird bei geringem Kühlluftdurchsatz und entsprechend niedrigen Ventilationsverlusten ein guter Wärmeübergang zur Kühlluft und damit eine gute Kühlwirkung erreicht; es ist jedoch keine gleichmässige Verteilung der Stehbolzen vorhanden, derart, dass die Stehbolzen in allen Bereichen des Bremsringes gleichen Abstand zueinander aufweisen. Durch die ungleichmässige Verteilung der Stehbolzen ergeben sich bei Aufheizung des Bremsringes unterschiedliche Spannungen innerhalb des Bremsringes und der Stehbolzen, es können sich unterschiedliche Temperaturfelder herausbilden und es kann zu Verformungen an den Aussenseiten der Ringkörper kommen, wodurch die Auflage der Bremsbacken und damit die Bremswirkung beeinträchtigt sind. Diese Effekte können sich derart steigern, dass im Bremsring Brüche auftreten.

Der Erfindung liegt die Aufgabe zugrunde, einen Bremsring der eingangs genannten Art derart auszugestalten, dass die Stehbolzen über die ganze Fläche des Bremsringes völlig gleichmässig verteilt sind und an allen Stellen gleichen Abstand zueinander aufweisen, wobei jedoch das Optimum zwischen niedrigen Ventilationsverlusten und hoher Kühlwirkung bzw. hohem Wärmeübergang entsprechend der DE-OS 2 505 205 beibehalten werden soll. Auch soll der Bremsring einfach und billig herstellbar sein.

Diese Aufgabe wird nach der Erfindung dadurch gelöst, dass die Achsen der Stehbolzen durch die Schnittpunkte von drei in einer Radialebene befindlichen Geradenscharen verlaufen, deren erste Geradenschar in gleichmässigem Abstand parallel zueinander verlaufende Gerade umfasst, und deren zweite und dritte Geradenschar durch Drehen der ersten Geradenschar um 60° bzw. 120° gebildet sind, und dass sich das durch die Geradenscharen gebildete, symmetrische Muster für die Anordnung der den Abstand zwischen den Ringkörpern überbrückenden Stehbolzen unterbrechungsfrei über die ganze Fläche der Ringkörper erstreckt. Durch die ununterbrochene Anordnung der Stehbolzen in dem durch die Geradenschar bestimmten Muster ergibt sich sowohl in Umfangsrichtung wie in radialer Richtung gesehen eine vollständig gleichmässige Verteilung der Stehbolzen über die Fläche des Bremsringes, an allen Stellen weisen die Stehbolzen völlig gleichen Abstand zueinander auf. Der an allen Stellen gleiche Stehbolzen-Abstand bewirkt eine völlig gleichmässige Verteilung der Spannungen in den Ringkörpern und den Stehbolzen und schliesst damit örtliche Verwerfungen der Ringkörper aus, so dass eine gleichmässige Beanspruchung der Aussenseiten der Ringkörper erzielt und die Voraussetzung für eine gleichmässige Temperaturverteilung geschaffen wird. Zugleich ergibt sich eine die Ventilationsluft oftmals umlenkende Anordnung der Stehbolzen, so dass bei geringem Luftdurchsatz und dementsprechend niedrigem Ventilationsverlust ein hoher Wärmeübergang und damit eine gute Kühlung des Bremsringes erzielt wird.

Bei Schienenfahrzeugen sind derzeit viele Scheibenbremsen vorhanden, deren Bremsscheiben Bremsringe mit radial ausgerichteten, durchgehenden Ventilationsrippen versehen sind. Um bei diesen Bremsscheiben die vorhandenen Bremsringe gegen nach der Erfindung ausgebildete Bremsringe mit wesentliche niedrigeren Ventilationsverlusten, verbesserter Kühlung und damit niedrigerer Temperaturbelastung und zusätzlich verringerter Bruchgefahr austauschen zu können, ist zum Erzielen gleicher Massen und damit gleicher Wärmeaufnahmefähigkeit insbesondere bei Stoppbremsungen, bei welchen also die Ventilationskühlung nur eine untergeordnete Rolle spielt, die Anordnung und Ausbildung der Stehbolzen nach der weiteren Erfindung derart zu bemessen, dass der Quotient aus dem Abstand der Schnittpunkte zum Durchmesser der wie bekannt zylindrischen Stehbolzen etwa 1,7 beträgt; ein besonders problemloser Ersatz der bekannten Bremsringe ist möglich, wenn gemäss der weiteren Erfindung der Abstand ca. 38 mm und der Durchmesser der Stehbolzen ca. 22 mm beträgt.

Zur Halterung des Bremsringes können nach der weiteren Erfindung an die radial innen befindlichen Stehbolzen axial und nach radial innen zu einem an sich bekannten Halteflansch verlaufende Verstärkungsrippen angeformt sein.

Die Erfindung ist anhand der Zeichnung in einem Ausführungsbeispiel erläutert, und zwar zeigt

Figur 1 einen Axialschnitt durch einen Bremsring und

Figur 2 einen Schnitt gemäss Linie II–II in Fig. 1.

Der Bremsring weist zwei im Abstand nebeneinander angeordnete, an den einander abgewandten Aussenseiten 1 von nicht dargestellten Bremsbacken beaufschlagbare Ringkörper 2 und 3 auf, wobei der eine Ringkörper 3 radial innen mit einem Halteflansch 4 versehen ist. Der Halteflansch 4 weist beidseitig zueinander parallele Konusflächen 5 und 6 auf, mit welchen er zwischen entsprechende Konusflächen an einer nicht dargestellten Nabe einspannbar ist; die Ausbildung des Halteflansches 4 und die Halterung an der Nabe entspricht der DE-A-2 828 101 und braucht daher hier nicht weiter erläutert zu werden.

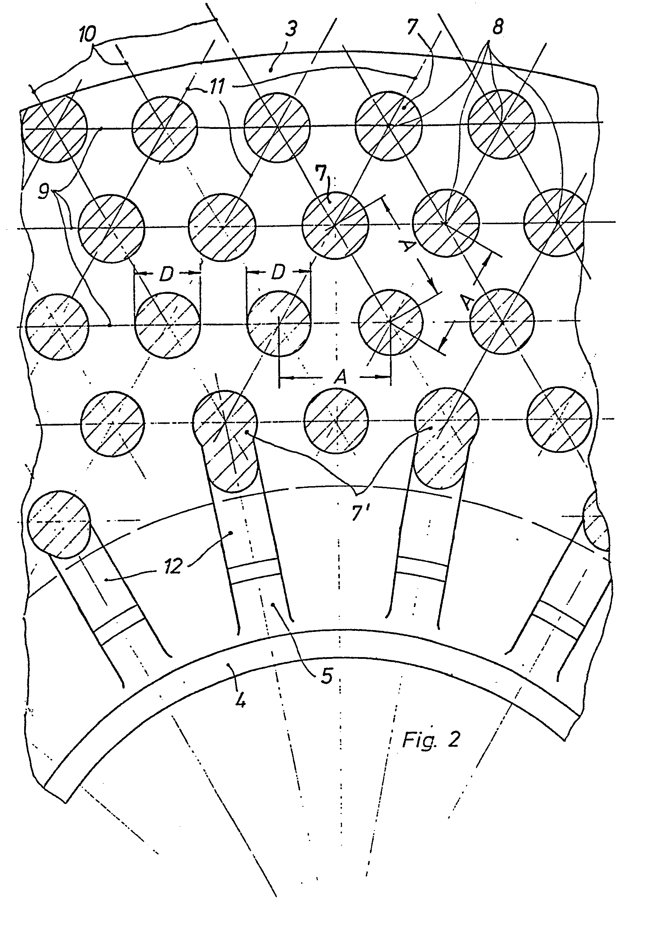

Zwischen den beiden Ringkörpern 2 und 3 erstrecken sich mit diesen starr verbundene, vorzugsweise einstückig gegossene Stehbolzen 7 runden Querschnitts. Die Stehbolzen 7 sind, wie aus Fig. 2 ersichtlich, über die ganze Flächen des Bremsringes völlig gleichmässig in einem bestimmten Muster angeordnet: Die Achsen 8 der Stehbolzen 7 gehen durch die Schnittpunkte von drei in einer Radialebene, also der Zeichenebene der Fig. 2 befindliche Geradenscharen 9, 10 und 11; die erste Geradenschar 9 weist in gleichmässigem Abstand parallel zueinander verlaufende Gerade auf, nach Fig. 2 verlaufen diese Geraden zufällig parallel zum oberen bzw. unteren Zeichnungsrand; die zweite Geradenschar 10 ist aus der ersten Geradenschar 9 durch Drehen im Uhrzeigersinn um 60° und die dritte Geradenschar 11 ist aus der ersten Geradenschar 9 durch Drehen im Uhrzeigersinn um 120° gebildet. Alle Achsen 8 der Stehbolzen 7 bzw. alle Schnittpunkte der Geradenscharen 9, 10 und 11 weisen damit den gleichen Abstand A zu den benachbarten Achsen 8 bzw. Geraden-Schnittpunkten auf.

Alle Stehbolzen weisen im wesentlichen den gleichen Durchmesser D auf; die Abmessungen sind derart getroffen, dass der Quotient aus dem Abstand A der Achsen 8 der Stehbolzen 7 bzw. der Schnittpunkte der Geradenscharen 9, 10 und 11 zum Durchmesser D der Stehbolzen 7 wenigstens annähernd 1,7 beträgt. Bei einem Bremsring für eine Schienenfahrzeug-Bremsscheibe mit üblichen Abmessungen, beispielsweise mit einem Aussendurchmesser von 640 mm und einem gegenseitigen Abstand der Aussenseiten 1 von 110 mm, beträgt der Abstand A zweckmässig 38 mm und der Durchmesser D 22 mm. Mit diesen Bemessungen ergibt sich ein Bremsring, dessen Masse weitestgehend den Massen der derzeit bei Schienenfahrzeugen üblichen Bremsringe mit radial ausgerichteten, durchgehenden Ventilationsrippen zwischen ihren Ringkörpern entspricht; ein derart bemessener Bremsring ist daher besonders geeignet, die bisher für Scheibenbremsen von Schienenfahrzeugen üblichen Bremsringe zu ersetzen und kann ohne weiteres zum Austausch für die bekannten Bremsringe verwendet werden: Hinsichtlich der mechanischen Beanspruchung ergibt sich infolge der gleichen Massen der bekannten und der neuen Bremsringe keinerlei Unterschied und auch hinsichtlich der Wärmeaufnahme- bzw. -Speicherfähigkeit der Bremsringe, welche insbesondere bei Stoppbremsungen des Schienenfahrzeuges mit hierbei weitgehend wegfallender Ventilationskühlung wesentlich ist, ergeben sich beim bisherigen Bremsring und beim neuen Bremsring keinerlei Unterschiede. Während der Fahrt des Schienenfahrzeuges weist der neue Bremsring jedoch wesentlich niedrigere Ventilationsverluste auf und bei Bremsungen während in Fahrt verbleibendem Schienenfahrzeug, beispielsweise bei Bremsungen in Gefällefahrten, ergeben sich durch den verbesserten Wärmeübergang vom Bremsring zur Kühlluft trotz des geringeren Kühlluft-Durchsatzes niedrigere Temperaturen als bisher üblich.

Die vollständig gleichmässige Verteilung der Stehbolzen 7 mit dem relativ geringen Abstand A ergibt eine völlig gleichmässige und gute Versteifung der Ringkörper 2 und 3, so dass deren Aussenflächen 1 auch bei hoher Aufheizung während Bremsvorgängen sich nicht verwerfen können, wobei zugleich eine gleichmässige Spannungsverteilung in den Ringkörpern 2 und 3 und in den Stehbolzen 7 gewährleistet ist.

Die völlig gleichmässige Verteilung der Stehbolzen bedingt, dass insbesondere am radial äusseren Rand des Bremsringes durch dessen Umfangsbegrenzung beschnittene Stehbolzen vorhanden sind, welche also einen kreisabschnittförmigen Querschnitt aufweisen. Es ist von besonderem Vorteil, dass die Stehbolzen-Anordnung für Bremsringe mit unterschiedlichen Durchmessern verwendbar ist, der Abstand A und der Durchmesser D können also für Bremsringe unterschiedlichen Durchmessers konstante Werte aufweisen. Dementsprechend ist es möglich, aus einem vorhandenen Bremsring einen Bremsring mit kleinerem Aussendurchmesser durch einfaches Abdrehen seines Aussenumfanges herzustellen, die durch die Anordnung der Stehbolzen 7 bedingten Funktionsvorteile des Bremsringes bleiben dabei voll erhalten.

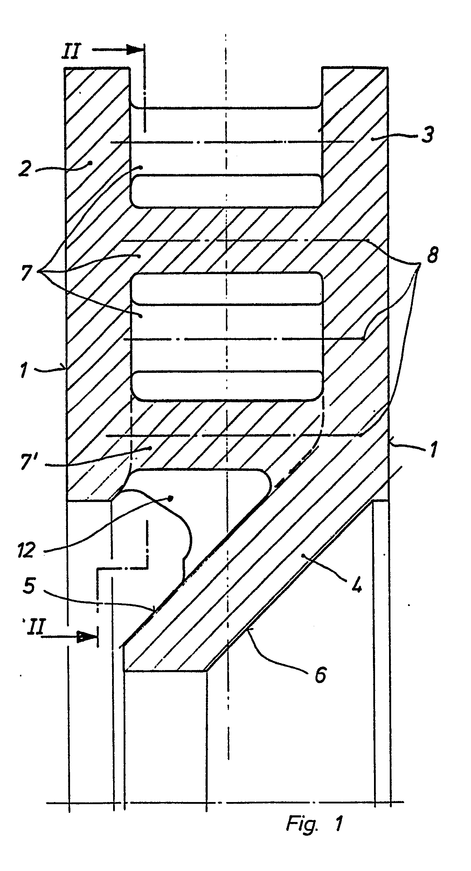

An den radial innen befindlichen Stehbolzen 7' sind, wie aus Fig. 1 und Fig. 2 ersichtlich, axial und nach radial innen zum Halteflansch verlaufende Verstärkungsrippen 12 einstückig angeformt. Diese Verstärkungsrippen 12 stören das Verteilungsmuster für die Stehbolzen 7 praktisch nicht, ergeben jedoch eine gute Verbindung der Ringkörper 2 und 3 und damit des ganzen Bremsringes mit dem Halteflansch 4.

In Abänderung vom vorstehend beschriebenen Ausführungsbeispiel ist es selbstverständlich auch möglich, die Stehbolzen 7 mit anderen Querschnittsformen, beispielsweise quadratisch oder sechseckig auszubilden. Weiterhin kann eine beliebige Halterung für den Bremsring vorgesehen sein, anstelle des Halteflansches 4 mit den Konusflächen 5 und 6 kann also eine andersartige Befestigungsvorrichtung für den Bremsring angebracht sein.

Die Ansatzstellen der Stehbolzen 7 bzw. 7' an den Ringkörpern 2 und 3 sind zum Geringhalten von bei Temperaturänderungen bzw. unterschiedlichen Temperaturen in diesen Bauteilen, insbesondere an diesen Ansatzstellen auftretenden Spannungen gut auszurunden. Der optimale Rundungsradius kann anhand der jeweiligen Werkstoff- und Abmessungsdaten errechnet werden, wobei nicht nur die unmittelbar an der Oberfläche dieser Ansatzstellen, sondern auch die im Inneren, unterhalb dieser Oberfläche auftretenden Spannungen zu berücksichtigen sind.

| 1 | Aussenseite | 8 | Achse |
|---|---|---|---|
| 2 | Ringkörper | 9 | Geradenschar |
| 3 | Ringkörper | 10 | Geradenschar |
| 4 | Halteflansch | 11 | Geradenschar |
| 5 | Konusfläche | 12 | Verstärkungsrippe |
| 6 | Konusfläche | A | Abstand |
| 7 | Stehbolzen | D | Durchmesser |
| 7' | Stehbolzen | | |

**Patentansprüche**

1. Bremsring für Bremsscheiben von insbesondere Schienenfahrzeug-Scheibenbremsen, mit zwei im Abstand nebeneinander angeordneten, an den einander abgewandten Aussenseiten (1) von Bremsbacken beaufschlagbaren Ringkörpern (2, 3), und mit in den Zwischenraum zwischen den Ringkörpern (2, 3) vorspringenden, an den Ringkörpern (2, 3) gehaltenen, mit Abstand (A) zueinander und parallel zur Achse der Bremsscheibe angeordneten Stehbolzen (7), die in axialer Sicht in einem symmetrischen Muster angeordnet sind, dadurch gekennzeichnet, dass die Achsen (8) der Stehbolzen (7) durch die Schnittpunkte von drei in einer Radialebene befindlichen Geradenscharen (9, 10 und 11) verlaufen, deren erste Geradenschar (9) in gleichmässigem Abstand parallel zueinander verlaufende Gerade umfasst, und deren zweite und dritte Geradenschar (10 und 11) durch Drehen der ersten Geradenschar (9) um 60° bzw. 120° gebildet sind, und dass sich das durch die Geradenscharen (9, 10 und 11) gebildete, symmetrische Muster für die Anordnung der den Abstand zwischen den Ringkörpern (2, 3) überbrükkenden Stehbolzen (7) unterbrechungsfrei über die ganze Fläche der Ringkörper (2, 3) erstreckt.

2. Bremsring nach Anspruch 1, mit zylindrischen Stehbolzen (7), dadurch gekennzeichnet, dass der Quotient aus dem Abstand (A) der Schnittpunkte zum Durchmesser (D) der Stehbolzen (7) etwa 1,7 beträgt.

3. Bremsring nach Anspruch 2, dadurch gekennzeichnet, dass der Abstand (A) ca. 38 mm und der Durchmesser (D) der Stehbolzen (7) ca. 22 mm beträgt.

4. Bremsring nach einem der Ansprüche 1 bis 3, dadurch gekennzeichnet, dass an die radial innen befindlichen Stehbolzen (7') axial und nach radial innen zu einem an sich bekannten Halteflansch (4) verlaufende Verstärkungsrippen (12) angeformt sind.

5. Bremsring nach einem oder mehreren der vorstehenden Ansprüche, dadurch gekennzeichnet, dass die Ansatzstellen der Stehbolzen (7, 7') an den Ringkörpern (2, 3) optimal gerundet ausgebildet sind.

## Claims

1. Brake rotor for brake discs, in particular for rail car disc brakes, having two annular bodies (2, 3) arranged adjacent one another and spaced apart, with outer faces (1) facing away from one another which can be acted upon by brake shoes, and having studs (7) connected to the annular bodies (2, 3) and projecting into the space between the annular bodies (2, 3), the studs being arranged at a distance (A) to one another and parallel to the axis of the brake disc, forming when viewed axially a symmetrical pattern, characterised in that the axes (8) of the studs (7) pass through the points of intersection of three sets of straight lines (9, 10 and 11), located in a radial plane, of which the first set of straight lines (9) comprises straight lines extending parallel to one another with equal spacing, and of which the second and third sets of straight lines (10 and 11) are formed as a turn through 60° and 120° respectively of the first set of straight lines (9), and in that the symmetrical pattern formed by the sets of straight lines (9, 10 and 11) for the arrangement of the studs (7), bridging the distance between the annular bodies (2, 3), extends without interruption over the whole surface of the ring bodies (2, 3).

2. Brake rotor according to claim 1, with cylindrical studs (7), characterised in that the quotient of the distance (A) between the points of intersection and the diameter (D) of each stud bolt (7) is approximately 1.7.

3. Brake rotor according to claim 2, characterised in that the distance (A) is about 38 mm and the diameter (D) of each stud (7) is about 22 mm.

4. Brake rotor according to any one of claims 1 to 3, characterised in that there is provided on the radially inner studs (7') strengthening ribs (12) extending axially and radially inwards to a holding flange (4) known per se.

5. Brake rotor according to any one or more of the preceding claims, characterised in that the regions at which the studs (7, 7') are connected to the annular bodies (2, 3) are formed with optimal curvature.

## Revendications

1. Anneau de frein pour disques de frein, en particulier de freins à disques pour véhicules sur rails, comportant deux corps annulaires (2, 3) disposés à distance l'un à côté de l'autre et dont les côtés extérieurs (1) éloignés l'un de l'autre sont susceptibles d'être chargés par des mâchoires de freinage, ainsi que des goujons (7) saillants dans l'espace intermédiaire entre les corps annulaires (2, 3), portés par ces derniers à une distance (A) entre eux et s'étendant parallèlement à l'axe du disque de frein, lesdits goujons étant agencés, en vue axiale, suivant un modèle symétrique, caractérisé par le fait que les axes (8) des goujons (7) passant par les points d'intersection de trois familles de droites (9, 10, 11) qui se situent dans un plan radial, la première famille de droites (9) comprenant des droites qui s'étendent à distance uniforme et parallèlement entre elles, alors que la seconde et la troisième famille de droites (10, 11) sont formées par rotation de la première famille de droites (9) de 60°, respectivement de 120°, et que le modèle symétrique formé par les familles de droites (9, 10, 11) pour la disposition des goujons (7) qui s'étendent sur l'intervalle entre les corps annulaires (2, 3), s'étend sans interruption sur toute la surface des corps annulaires (2, 3).

2. Anneau de frein selon la revendication 1 à goujons cylindriques (7), caractérisé par le fait que le quotient de la distance (A) des points d'intersection au diamètre (D) des goujons (7) est à peu près égal à 1,7.

3. Anneau de frein selon la revendication 2, caractérisé par le fait que la distance (A) est d'environ 38 mm et le diamètre (D) des goujons (7) est d'environ 22 mm.

4. Anneau de frein selon l'une des revendications 1 à 3, caractérisé par le fait que sur les goujons (7') situés radialement vers l'intérieur sont conformées des nervures de renforcement (12) qui s'étendent axialement et radialement vers l'intérieur, en direction d'un flasque de support (4) connu en lui-même.

5. Anneau de frein selon une ou plusieurs des revendications précédentes, caractérisé par le fait que les pieds des goujons (7, 7') sur les corps annulaires (2, 3) sont conformés avec un arrondi maximum.

Fig. 1

Fig. 2